# EUROPEAN PATENT APPLICATION

(11) **EP 4 851 688 A1**
(43) Date of publication of application: **09.12.2026**
(21) Application number: 25809695.7
(22) Date of filing: 22.04.2025
(51) Int. Cl.: G02B 6/44, G02B 6/50

(54) **OPTICAL FIBER CABLE**

(30) Priority: 08.05.2024 JP 2024075714
(71) Applicant: Lightera Japan Co., Ltd., Tokyo 100-8322 (JP)
(72) Inventor: TAKEUCHI, Taisetsu, Tokyo 100-8322 (JP)
(74) Representative: Goddar, Heinz J.
(86) International application number: PCT/JP2025/015537
(87) International publication number: WO 2025/234312

(57) **Abstract**

A plurality of rib portions (9) and groove portions (7) are alternately arranged in the circumferential direction on the outer periphery of a slot rod (5), and the groove portions (7) are formed between adjacent rib portions (9). A plurality of optical fibers (15) are accommodated in each of the groove portions (7) of the slot rod (3), and a wrapping (11) is wound around the outer periphery of the slot rod (5). The outer periphery of the wrapping (11) is covered with the outer jacket (13). The shortest distance (b) from the center of the slot rod (5) to the surface of the outer jacket (13) covering the groove portion (7) is smaller than the distance (a) from the center of the slot rod (5) to the surface of the outer jacket (13) covering the rib portion (9).

## Description

### TECHNICAL FIELD

The present invention relates to a slot-type optical fiber cable.

### BACKGROUND OF THE INVENTION

Conventionally, optical fiber cables using a slot rod have been used. A plurality of grooves are formed on the outer peripheral surface of the slot rod, and a plurality of optical fibers are accommodated in the grooves.

The grooves on the outer peripheral surface of the slot rod describe a spiral locus in one direction (S type) or in a manner of alternately changing direction (SZ type) at a certain pitch with respect to the longitudinal direction of the slot rod. That is, the positions of the optical fibers in the circumferential direction of the optical fiber cable change with respect to the longitudinal direction of the optical fiber cable.

By using such a slot rod, when the optical fiber cable is bent, each optical fiber can be positioned on both an outer side and an inner side with respect to the bending center of the cable at each portion in the longitudinal direction of the optical fiber cable. Therefore, transmission loss of the optical fibers can be made uniform, and an increase in transmission loss can be suppressed.

When laying such an optical fiber cable in a duct, wiring work becomes difficult due to friction between the optical fiber cable and the inner surface of the duct. For this reason, a method has been proposed in which the cross-sectional shape of the optical fiber cable is made polygonal rather than circular (an outer shape made up of a plurality of flat surfaces in cross section), thereby reducing the contact area with the inner surface of the duct and reducing friction (Patent Document 1).

### RELATED ARTS

### PATENT DOCUMENT

[Patent Document 1] International Publication No. 2018/230618

### SUMMARY OF THE INVENTION

### (PROBLEM TO BE SOLVED BY THE INVENTION)

However, even in such a polygonal optical fiber cable, the contact area with the inner surface of the duct may increase due to deformation of the outer jacket, and the frictional resistance may become large. Further, even if the effect of reducing friction is obtained by reducing the contact area with the inner surface of a circular duct, when laying in a square duct or a trough, one side of the polygon comes into surface contact with the inner surface of the duct or trough, so that frictional resistance increases.

The present invention has been made in view of such problems, and an object thereof is to provide a slot-type optical fiber cable capable of reducing frictional resistance when being laid in a duct or the like.

### MEANS FOR SOLVING THE PROBLEM

In order to achieve the above-mentioned object, the present invention is an optical fiber cable comprising: a slot rod having a plurality of rib portions on an outer periphery and a plurality of groove portions formed between the rib portions; a plurality of optical fibers accommodated in the groove portions; and an outer jacket covering the outer periphery of the slot rod, wherein, in a cross section perpendicular to a longitudinal direction of the slot rod, a ratio b/a, which is a ratio of a distance a from the center of the slot rod to a surface of the outer jacket covering the rib portion and a shortest distance b from the center of the slot rod to a surface of the outer jacket covering the groove portion, is less than 1.

It is desirable that 0.7 ≦ (b/a) ≦ 0.95 be satisfied.

It is desirable that a winding tension of the wrapping be 4 N or more and less than 30 N.

It is desirable that the number of optical fibers be 100 or more and 640 or less.

In a cross section perpendicular to the longitudinal direction of the slot rod, it is desirable that a ratio i/h, which is a ratio of a distance h from the center of the slot rod to an inner surface of the wrapping covering the rib portion and a shortest distance i from the center of the slot rod to an inner surface of the wrapping covering the groove portion, is less than 1.

In a cross section perpendicular to the longitudinal direction of the slot rod, it is desirable that a gap be formed between an inner surface of the wrapping covering the groove portion and the optical fibers accommodated in the groove portion.

It is desirable that the gap be 0.2 mm or more and 4.5 mm or less.

It is desirable that the wrapping be wound so as to cover the outer peripheral surface of the slot rod without a gap.

It is desirable that the optical fibers be provided as intermittently bonded optical fiber ribbons in which a plurality of single optical fibers are arranged in parallel and intermittently bonded in the longitudinal direction.

According to the present invention, in a cross section perpendicular to the longitudinal direction of the slot rod, since the shortest distance b from the center of the slot rod to the surface of the outer jacket covering the groove portion is smaller than the distance a from the center of the slot rod to the surface of the outer jacket covering the rib portion, surface contact between the outer jacket on the outer surface of the groove portion and the inner surface of a duct or the like is suppressed. That is, by making the outer jacket on the outer surface of the groove portion slightly concave, the contact area between the inner surface of the duct or the like and the outer jacket at that portion becomes small, and frictional resistance can be suppressed. Therefore, wiring work in a duct or the like is facilitated.

Such an effect can be obtained particularly when 0.7 ≦ (b/a) ≦ 0.95 is satisfied.

In particular, by making the winding tension of the wrapping 4 N or more and less than 30 N, the above-mentioned optical fiber cable can be obtained efficiently.

Further, the present invention is suitable for an optical fiber cable in which the number of optical fibers is 100 or more and 640 or less.

Further, in a cross section perpendicular to the longitudinal direction of the slot rod, by making the shortest distance i from the center of the slot rod to the inner surface of the wrapping covering the groove portion smaller than the distance h from the center of the slot rod to the inner surface of the wrapping covering the rib portion, the above-mentioned b/a can be made less than 1 in a state in which the wrapping member is wound.

Further, in a cross section perpendicular to the longitudinal direction of the slot rod, by forming a gap between the inner surface of the wrapping covering the groove portion and the optical fibers accommodated in the groove portion, it is possible to suppress the optical fibers from receiving side pressure from the outer jacket.

Further, if this gap is 0.2 mm or more and 4.5 mm or less, side pressure on the optical fibers can be suppressed, and a sufficient packing density of the optical fibers in the groove portion can be secured.

Further, if the wrapping is wound so as to cover the outer peripheral surface of the slot rod without a gap, post-processing such as branching work becomes easy.

Further, if the optical fibers are provided as intermittently bonded optical fiber ribbons in which a plurality of single optical fibers are arranged in parallel and intermittently bonded in the longitudinal direction, increase in loss can be suppressed even when the cable is bent.

### EFFECTS OF THE INVENTION

According to the present invention, it is possible to provide a slot-type optical fiber cable capable of reducing frictional resistance when being laid in a duct or the like.

### BRIEF DESCRIPTION OF THE DRAWINGS

FIG. 1 is a cross-sectional view showing an optical fiber cable 1.
FIG. 2 is a partially enlarged view of the optical fiber cable 1.
FIG. 3A is a view showing a state in which the optical fiber cable 1 is installed in a duct 17.
FIG. 3B is a view showing a state in which the optical fiber cable 1 is installed in the duct 17.

### DESCRIPTION OF EMBODIMENTS

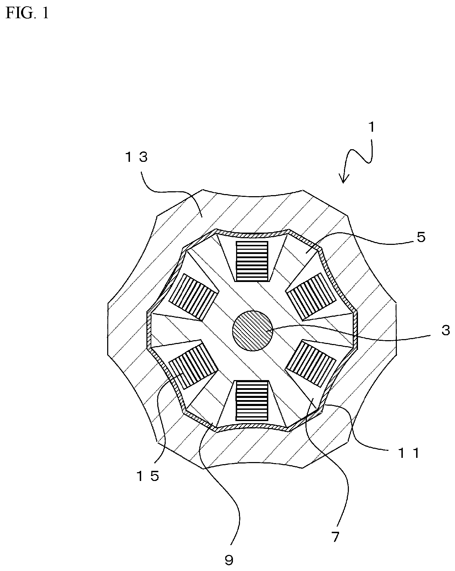

Hereinafter, embodiments of the present invention will be described with reference to the drawings. FIG. 1 is a cross-sectional view perpendicular to the longitudinal direction of the optical fiber cable 1. The optical fiber cable 1 is composed of a tension member 3, a slot rod 5, a wrapping 11, an outer jacket 13, optical fibers 15, and the like.

The tension member 3, which is a tensile strength member, is provided at the center of the slot rod 5. The tension member 3 is composed of, for example, a steel wire or FRP having resistance to tension and compression.

Further, a plurality of groove portions 7 are provided on the outer periphery of the slot rod 5. A rib portion 9 is formed between adjacent groove portions 7. That is, in a cross section perpendicular to the longitudinal direction of the slot rod 5, a plurality of rib portions 9 and groove portions 7 are alternately arranged in the circumferential direction on the outer periphery of the slot rod 5, and the groove portions 7 are formed between adjacent rib portions 9.

The groove portions 7 describe a spiral locus in one direction (S type) or in a manner of alternately changing direction (SZ type) at a certain pitch with respect to the longitudinal direction of the slot rod 5. Although the number and depth of arrangement of the groove portions 7 are not limited to the illustrated example, for example, four to twelve groove portions 7 (rib portions 9) are provided in the circumferential direction.

A plurality of optical fibers 15 are accommodated inside each groove portion 7 of the slot rod 5. The form of the optical fibers 15 is not particularly limited, but in the illustrated example, the optical fibers 15 are optical fiber ribbons in which a plurality of single optical fibers are arranged in parallel and integrated. Since the optical fiber ribbon is tape-shaped, it is resistant to external force and has good handling properties and high post-processability. A optical fiber ribbon may be, for example, intermittently bonded optical fiber ribbon in which a plurality of single optical fibers are arranged in parallel and intermittently bonded in the longitudinal direction. At this time, it is desirable that bonding portions for bonding the single optical fibers are not arranged in a line in the width direction, and that the respective bonding portions for bonding between adjacent single optical fibers in the width direction are displaced in the longitudinal direction. Further, a plurality of optical fiber ribbons may be bundled to form an optical fiber unit, and a plurality of optical fiber units may be twisted together and accommodated in the groove portion 7. The total number of optical fibers 15 is not particularly limited, but is preferably, for example, 100 or more and 640 or less.

Although the shapes of the groove portions 7 and the rib portions 9 are not particularly limited, as illustrated, it is desirable that both the groove portions 7 and the rib portions 9 be formed such that the width on the center side of the optical fiber cable 1 is narrow and gradually becomes wider toward the outer peripheral direction. In this manner, by making the width of the bottom of the groove portion 7 close to the tape width of the optical fibers 15, the optical fibers 15 can be stably installed in the groove portion 7. Further, by making the width of the rib portion 9 expand in the outer peripheral direction, workability for inserting the optical fibers 15 into the groove portion 7 is improved.

In a state in which a plurality of optical fibers 15 are accommodated in each groove portion 7, the wrapping 11 is wound around the outer periphery of the slot rod 5. The wrapping 11 is formed by longitudinally wrapping or by spirally winding a tape-shaped nonwoven fabric, for example, around the outer periphery of the slot rod 5. Further, a tear cord is disposed on the outer periphery of the wrapping 11 as necessary, and the outer periphery of the wrapping 11 is covered with the outer jacket 13.

For example, when the wrapping 11 is longitudinally wrapped around the outer periphery of the slot rod 5, the wrapping 11 is wound around the slot rod 5 so that the widthwise end portions of the wrapping 11 overlap. At this time, the overlapping portion of the wrapping 11 continuously extends in a substantially linear manner in the longitudinal direction. Further, when the wrapping 11 is spirally wound around the outer periphery of the slot rod 5, the wrapping 11 is wound around the slot rod 5 so that the widthwise end portions of the wrapping 11 overlap. At this time, the overlapping portion of the wrapping 11 continuously extends spirally with respect to the longitudinal direction. That is, the wrapping 11 is wound so as to cover the outer peripheral surface of the slot rod 5 without a gap. By doing so, the outer jacket 13 and the slot rod 5 do not contact each other, so workability such as branching work is improved.

The thickness of the outer jacket 13 is, for example, about 1.5 mm to 2.2 mm, and is substantially the same over the entire circumference. That is, in cross section, the inner surface and outer surface of the outer jacket 13 are substantially parallel. Further, a tracer mark capable of identifying the positions of the rib portions 9 and the groove portions 7 may be provided on the surface of the outer jacket 13 corresponding to the rib portions 9 or on the outer surface of the outer jacket 13 corresponding to the groove portions 7.

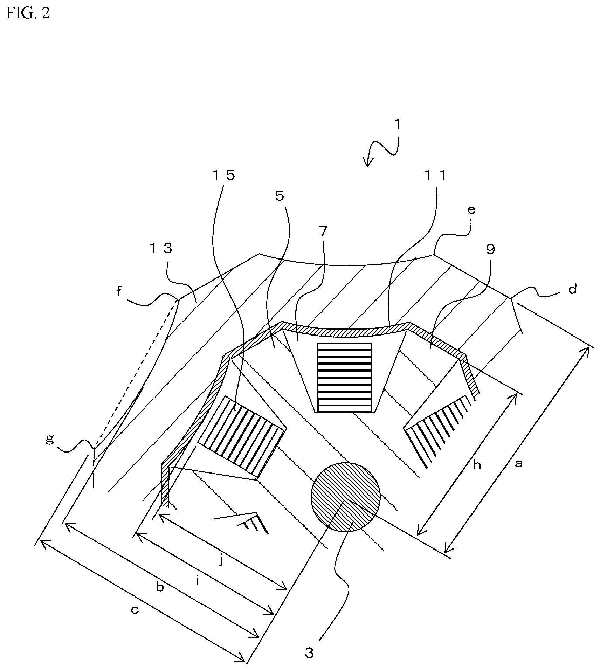

FIG. 2 is a partially enlarged view of FIG. 1. The outer peripheral surface of the rib portion 9 of the slot rod 5 is substantially flat. For this reason, the outer peripheral portion of the outer jacket 13 at the portion corresponding to the rib portion 9 of the slot rod 5 becomes a substantially flat surface. That is, in cross section, the portion between the positions of the outer peripheral surface of the outer jacket 13 corresponding to the boundary between the rib portion 9 and the groove portion 7, namely, between the e portion and the d portion, is substantially straight. Note that the outer peripheral surface of the rib portion 9 need not be entirely flat, and, for example, a tapered shape may be formed at both end portions (near the boundary with the groove portion 7) so as to decrease in diameter toward the groove portion 7.

The outer peripheral portion of the outer jacket 13 at the portion corresponding to the groove portion 7 of the slot rod 5 has a gentle concave shape. That is, the portion between the positions of the outer peripheral surface of the outer jacket 13 corresponding to the boundary between the rib portion 9 and the groove portion 7, namely, between the f portion and the g portion, is arc-shaped toward the center direction of the optical fiber cable 1. At this time, the wrapping 11 is also pushed into the groove portion 7 and becomes arc-shaped toward the center direction of the optical fiber cable 1.

Here, in a cross section perpendicular to the longitudinal direction of the slot rod 5, a distance from the center of the slot rod 5 to the surface of the outer jacket 13 covering the rib portion 9 is defined as a. For example, the distance between the midpoint of the e portion and the d portion in the drawing and the center of the slot rod 5 is defined as a. Further, the shortest distance from the center of the slot rod 5 to the surface of the outer jacket 13 covering the groove portion 7 is defined as b. For example, the distance between the midpoint on the arc between the f portion and the g portion in the drawing and the center of the slot rod 5 is defined as b.

In this case, the shortest distance b from the center of the slot rod 5 to the surface of the outer jacket 13 covering the groove portion 7 is smaller than the distance a from the center of the slot rod 5 to the surface of the outer jacket 13 covering the rib portion 9. That is, the ratio b/a of the distance a and the distance b is less than 1.

Further, the shortest distance i from the center of the slot rod 5 to the inner surface of the wrapping 11 covering the groove portion 7 is smaller than the distance h from the center of the slot rod 5 to the inner surface of the wrapping 11 covering the rib portion 9. That is, the ratio i/h of the distance h and the distance i is also less than 1.

In the case where the optical fiber cable 1 is substantially polygonal, the portion between the f portion and the g portion in the drawing is substantially straight. In this case, the distance c from the center of the slot rod 5 to the surface of the outer jacket 13 covering the groove portion 7 substantially coincides with the distance a from the center of the slot rod 5 to the surface of the outer jacket 13 covering the rib portion 9. In contrast, by making the outer surface of the outer jacket 13 at the portion corresponding to the groove portion 7 concave, the ratio b/a of the distance a and the distance b, and the ratio i/h of the distance h and the distance i can be made less than 1.

The distance j from the center of the slot rod 5 to the outer peripheral surface of the optical fibers 15 in the groove portion 7 is smaller than the shortest distance i from the center of the slot rod 5 to the inner surface of the wrapping 11 covering the groove portion 7. That is, a gap is formed between the wrapping 11 and the optical fibers 15, and the inner surface of the wrapping 11 does not contact the optical fibers 15 in the groove portion 7. It is desirable that this gap be 0.2 mm or more and 4.5 mm or less. By providing such a gap, side pressure from the outer jacket 13 on the optical fibers 15 can be suppressed. If the gap exceeds 4.5 mm, the packing density becomes low, which is undesirable.

As described above, by making the outer surface of the portion corresponding to the groove portion 7 concave, surface contact between the outer surface of the outer jacket 13 at the outside of the groove portion 7 and the inner surface of a duct or the like is suppressed, and frictional resistance can be suppressed.

In particular, in a cross section perpendicular to the axial direction of the optical fiber cable 1, the width of the outer jacket 13 corresponding to the opening portion of the groove portion 7 (f-g in FIG. 2) is wider than the width of the outer jacket 13 corresponding to the rib portion 9 (d-e in FIG. 2). For this reason, when laid in a duct or the like, the posture in which the outer jacket 13 corresponding to the groove portion 7 contacts the inner surface of the duct becomes stable. Therefore, if the outer surface of the outer jacket 13 corresponding to the groove portion 7 is linear, a wider area comes into contact with the inner surface of the duct. In contrast, in the present embodiment, even when the outer jacket 13 corresponding to the groove portion 7 is disposed opposite the inner surface of the duct, the contact area is small, and frictional resistance can be reduced.

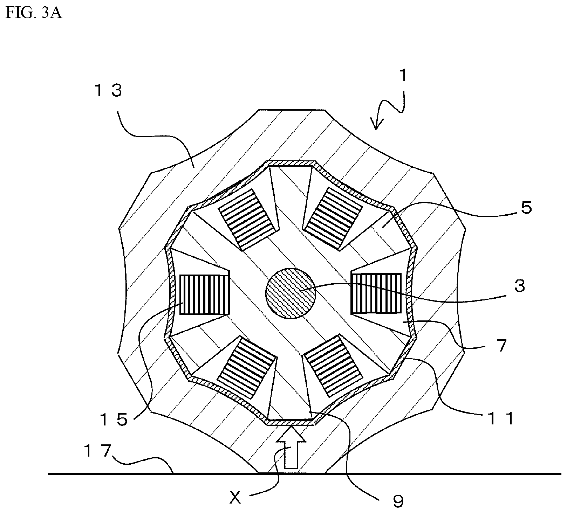

Further, as a secondary effect, side pressure on the optical fibers 15 inside the groove portion 7 due to contact with the duct or the like can also be suppressed. FIG. 3A is a view showing a state in which the optical fiber cable 1 is arranged in a duct 17 having a flat inner surface. In the state shown in FIG. 3A, the outer surface of the outer jacket 13 at the portion corresponding to the rib portion 9 contacts the inner surface of the duct 17. In this case, for example, a reaction force X due to the weight of the optical fiber cable 1 is transmitted to the rib portion 9 of the slot rod 5 via the outer jacket 13 (and the wrapping 11). In this case, since force is received by the rib portion 9, transmission of force to the optical fibers 15 accommodated in the groove portion 7 is suppressed.

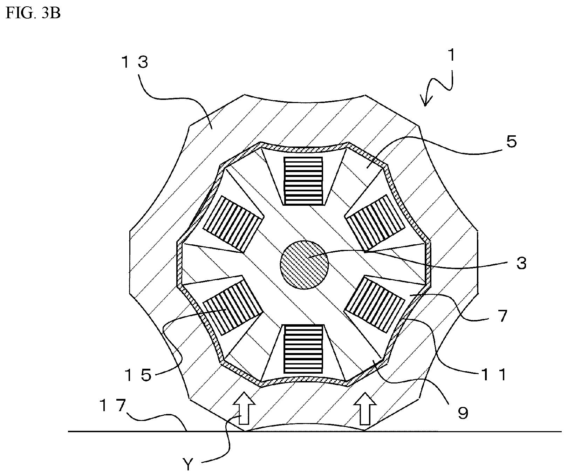

On the other hand, as described above, in the state shown in FIG. 3B, which is a more stable posture, the outer surface of the outer jacket 13 at the portion corresponding to the groove portion 7 faces the inner surface of the duct 17. However, as described above, since the outer surface of the outer jacket 13 at the portion corresponding to the groove portion 7 is concave, only the vicinity of the boundary portion between the outer jacket 13 corresponding to the groove portion 7 and the rib portion 9 contacts the inner surface of the duct 17.

In this case, for example, a reaction force Y due to the weight of the optical fiber cable 1 is transmitted to the end portion of the rib portion 9 of the slot rod 5 via the outer jacket 13 (and the wrapping 11). That is, transmission of force to the groove portion 7 is suppressed. Therefore, transmission of force to the optical fibers 15 accommodated in the groove portion 7 is suppressed. In particular, since the inner surface of the wrapping 11 in the groove portion 7 does not contact the optical fibers 15, transmission of force to the optical fibers 15 is more reliably suppressed.

As described above, by making the outer surface of the outer jacket 13 corresponding to all of the groove portions 7 concave, force applied to the optical fibers 15 accommodated in the groove portions 7 can be suppressed regardless of the posture of the optical fiber cable 1, and an increase in transmission loss due to side pressure on the optical fibers 15 can also be suppressed.

The aforementioned ratio b/a is preferably 0.7 ≦ (b/a) ≦ 0.95. If the ratio b/a exceeds 0.95, the friction-reducing effect becomes small due to deformation of the outer jacket 13 or the like. Further, if the ratio b/a becomes less than 0.7, the wrapping 11 is excessively pushed into the groove portion 7, and the accommodation volume in the groove portion 7 decreases.

Next, a method for manufacturing the optical fiber cable 1 will be described. The optical fiber cable 1 can be manufactured by substantially the same method as a conventional optical fiber cable. For example, first, a plurality of optical fibers 15 are twisted together, and one or more bundle members for identification are wound thereon to produce an optical fiber unit.

Thereafter, a plurality of optical fiber units are accommodated in each groove portion 7 of the slot rod 5, and further, the wrapping 11 is wound around the outer periphery of the slot rod 5, and the outer jacket 13 is extrusion-coated, whereby the optical fiber cable 1 is manufactured.

Here, under normal manufacturing conditions, the outer surface of the outer jacket 13 corresponding to the groove portion 7 does not become concave but becomes a substantially flat portion (the dotted line portion in FIG. 2). On the other hand, as a method of making the outer surface of the outer jacket 13 corresponding to the groove portion 7 concave, for example, the winding conditions of the wrapping 11 are adjusted.

The wrapping 11 is usually wound with a certain tension so that slack does not occur. By preventing slack from occurring in the wrapping 11 in this manner, the accommodation volume of the groove portion 7 can be secured, and the winding length of the wrapping 11 can be shortened.

On the other hand, in the present embodiment, the winding tension of the wrapping 11 is made weaker than the conventional manufacturing conditions. That is, the wrapping 11 is wound around the outer periphery of the slot rod 5 so that slack is intentionally formed in the wrapping 11. In this state, by extruding the outer jacket 13 to the outer periphery of the wrapping 11, the outer jacket 13 is extruded onto the outer periphery of the wrapping 11, which is appropriately slackened inside the groove portion 7, whereby the outer surface can be made concave.

The winding tension of the wrapping 11 is preferably 4 N or more and less than 30 N. If the winding tension of the wrapping 11 is 30 N or more, it becomes difficult to form slack in the wrapping 11. Further, if the winding tension of the wrapping 11 is less than 4 N, the slack becomes too large, and the accommodation volume for the optical fibers decreases.

In addition to the above-described tension adjustment of the wrapping 11, in order to obtain a more optimal slack shape, the diameter of the die for extruding the outer jacket 13, the basis weight, and the drawdown may be further adjusted. By adjusting the extrusion conditions of the outer jacket 13 so as to obtain a slack shape, the outer surface of the outer jacket 13 can be efficiently made concave.

As described above, according to the present embodiment, since the outer jacket 13 on the outer side of the groove portion 7 is concave, when laid inside a duct or the like, the contact area with the optical fiber cable 1 can be reduced, and frictional resistance can be reduced.

In particular, by satisfying (b/a) ≦ 0.95, the above-mentioned effect can be obtained more reliably. Further, by satisfying 0.7 ≦ (b/a), the wrapping 11 does not excessively enter the groove portion 7, and a decrease in the accommodation volume that can be accommodated in the groove portion 7 can be suppressed.

Further, as a secondary effect, since the outer surface of the outer jacket 13 corresponding to the groove portion 7 does not make surface contact with the duct or the like, side pressure on the optical fibers 15 inside the groove portion 7 can be suppressed, and an increase in optical loss can be suppressed.

Further, by allowing a part of the outer jacket 13 to enter into the groove portion 7 of the slot rod 5, the pulling-out force of the core (the slot rod 5 and the wrapping 11) with respect to the outer jacket 13 can be increased. For example, if the outer surface of the outer jacket 13 corresponding to the groove portion 7 is not concave but is made substantially flat (the dotted line portion in FIG. 2), the inner surface of the outer jacket 13 at that portion also becomes substantially flat. In this case, the core can easily move with respect to the outer jacket 13, and the pulling-out force may become low. In contrast, by forming the inner surface of the outer jacket 13 in an arc shape rather than a straight line, resistance to movement of the core is increased, and it is also possible to improve the pulling-out force.

### WORKING EXAMPLES

Various optical fiber cables were prepared, and the pull-out force and optical characteristics were evaluated. A frictional resistance evaluation test was conducted in accordance with the Telcordia standard (GR-356-Core section 4.2.5, R4-7). The results are shown in Table 1.

**[Table 1]**

| | Working Example 1 | Working Example 2 | Working Example 3 | Working Example 4 | Working Example 5 | Working Example 6 | Working Example 7 | Working Example 8 | Comparative Example 1 |
|---|---|---|---|---|---|---|---|---|---|
| Number of optical fibers | 100 | 100 | 100 | 100 | 100 | 400 | 640 | 360 | 100 |
| Cable outer diameter (mm) | 12.0 | 12.0 | 12.0 | 12.0 | 12.0 | 20.5 | 23.0 | 12.0 | 12.0 |
| Number of ribs | 5 | 5 | 5 | 5 | 5 | 5 | 8 | 5 | 5 |
| Wrapping tension (N) | 30 | 27 | 22 | 13 | 4 | 27 | 23 | 2 | 50 |
| Distance a (mm) | 6.0 | 6.0 | 6.0 | 6.0 | 6.0 | 10.3 | 11.5 | 10.3 | 6.0 |
| Distance b (mm) | 5.7 | 5.4 | 5.0 | 4.8 | 4.2 | 9.2 | 9.8 | 6.2 | 6.0 |
| b/a | 0.95 | 0.90 | 0.84 | 0.80 | 0.70 | 0.90 | 0.85 | 0.60 | 1.00 |
| Frictional resistance | good | good | good | good | good | good | good | good | bad |
| Fiber filling rate | good | good | good | good | good | good | good | average | good |

In the table, "number of ribs" is the number of rib portions in the slot rod (that is, the number of groove portions). "Wrapping tension" is the tension of the wrapping during manufacture of the optical fiber cable. The wrapping was longitudinally applied.

In the table, "distance a" and "distance b" are the distance a and distance b shown in FIG. 2. That is, the distance a is the distance from the center of the slot rod to the surface of the outer jacket corresponding to the center of the rib portion, and the distance b is the distance from the center of the slot rod to the surface of the outer jacket corresponding to the center of the groove portion. The respective distances were measured by taking a cross-sectional image perpendicular to the longitudinal direction of the optical fiber cable with a microscope and measuring dimensions in an enlarged image.

Further, in the table, "frictional resistance" was judged as pass "good" when the frictional resistance was smaller than that of the conventional optical fiber cable with no recess (Comparative Example 1), and otherwise judged as fail "bad". That is, Comparative Example 1 was judged as fail, and those with smaller frictional resistance than that were judged as pass.

Further, in the table, "fiber filling rate" was judged as "good" when the reduction rate was less than 30% compared with the case of Comparative Example 1 with no recess, regarding the number of optical fibers that can be filled in one groove portion, and was judged as "average" when the reduction was 30% or more.

From the results, Working Examples 1 to 8, in which the outer surface of the outer jacket was made concave (b/a < 1), all had frictional resistance of "good". That is, Working Examples 1 to 8, in which a concave portion was provided on the outer surface of the groove portion 7, were all able to reduce frictional resistance compared with the conventional one having a flat outer surface of the outer jacket.

Note that Working Example 8 was rated "average" because the number of optical fibers decreased by 30% or more compared with Comparative Example 1 because the concavity was too large (b/a was too small).

Although embodiments of the present invention have been described above with reference to the accompanying drawings, the technical scope of the present invention is not limited by the above-described embodiments. It is apparent that those skilled in the art can conceive various modifications or alterations within the scope of the technical idea described in the claims, and such modifications or alterations are naturally understood to belong to the technical scope of the present invention.

### DESCRIPTION OF NOTATIONS

- 1: optical fiber cable
- 3: tension member
- 5: slot rod
- 7: groove portion
- 9: rib portion
- 11: wrapping
- 13: outer jacket
- 15: optical fiber
- 17: duct

## Claims

1. An optical fiber cable comprising:
a slot rod having a plurality of rib portions on an outer periphery and a plurality of groove portions formed between the rib portions;
a plurality of optical fibers accommodated in the groove portions;
a wrapping wound around the slot rod; and
an outer jacket covering an outer periphery of the wrapping, wherein,
in a cross section perpendicular to a longitudinal direction of the slot rod, a ratio b/a, which is a ratio of a distance a from the center of the slot rod to a surface of the outer jacket covering the rib portion and a shortest distance b from the center of the slot rod to a surface of the outer jacket covering the groove portion, is less than 1.

2. The optical fiber cable according to claim 1, wherein 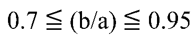 is satisfied.

3. The optical fiber cable according to claim 1, wherein
a winding tension of the wrapping is 4 N or more and less than 30 N.

4. The optical fiber cable according to claim 1, wherein
the number of optical fibers is 100 or more and 640 or less.

5. The optical fiber cable according to claim 1, wherein,
in a cross section perpendicular to the longitudinal direction of the slot rod, a ratio i/h, which is a ratio of a distance h from the center of the slot rod to an inner surface of the wrapping covering the rib portion and a shortest distance i from the center of the slot rod to an inner surface of the wrapping covering the groove portion, is less than 1.

6. The optical fiber cable according to claim 1, wherein,
in a cross section perpendicular to the longitudinal direction of the slot rod, a gap is formed between an inner surface of the wrapping covering the groove portion and the optical fibers accommodated in the groove portion.

7. The optical fiber cable according to claim 6, wherein
the gap is 0.2 mm or more and 4.5 mm or less.

8. The optical fiber cable according to claim 1, wherein
the wrapping is wound so as to cover the outer peripheral surface of the slot rod without a gap.

9. The optical fiber cable according to claim 1, wherein
the optical fibers are provided as intermittently bonded optical fiber ribbons in which a plurality of single optical fibers are arranged in parallel and intermittently bonded in the longitudinal direction.
